# EUROPEAN PATENT APPLICATION

(11) **EP 3 279 275 A1**
(43) Date of publication of application: **07.02.2018**
(21) Application number: 16382385.9
(22) Date of filing: 04.08.2016
(51) Int. Cl.: C09D 11/00, C09D 11/30, C09D 11/322, C09D 11/326

(54) **INKJET PRINTING INK, METHOD OF OBTAINING SAID INK AND USING IT FOR MAKING AN INSULATING FILM**

(71) Applicant: Fundación Cetena, 31110 Noain (Navarra) (ES)
(72) Inventor: ARESTI BARTOLOME, Maite, 31110 NOAIN (Navarra) (ES); LASHERAS ZUBIATE, Maria, 31110 NOAIN (Navarra) (ES)
(74) Representative: Ungria López, Javier

(57) **Abstract**

The present invention refers to an inkjet printing ink comprising: (a) between 65% and 75% by weight of a liquid dispersion medium, which in turn comprises between 84% and 99.8% by weight of a polar liquid medium, between 0.1 % and 8% by weight of at least one non-ionic polymeric dispersing agent and between 0.1 % and 8% by weight of at least one polymeric binding agent; and (b) between 25% and 35% by weight of nanoparticles of at least one inorganic oxide of a size smaller than or equal to 100 nm. The ink is characterised in that it has a viscosity between 8 and 40 mPa.s, measured at 21°C, and a surface tension between 28 and 34 mN/m, measured at 21°C. The method of obtaining said ink and using it for making an insulating film is also an object of the invention.

## Description

### TECHNICAL FIELD OF THE INVENTION

The present invention, as expressed in the title of the present description, refers to an inkjet printing ink, the method of obtaining said ink and its use for making an insulating film, aimed at preparing stable inks based on nanoparticles of inorganic oxides dispersed in a liquid medium and their subsequent application by means of inkjet printing techniques to obtain a film with insulating properties for printed electronics.

### BACKGROUND OF THE INVENTION

The growing demand for high performance and low cost electronic products forces the electronics industry to look for manufacturing alternatives that may be able to meet these demands.

Therefore, there are several different techniques that can be used for manufacturing electronic devices such as antennas or touchscreens. These include both conventional techniques such as those used in microelectronics (PVD - Physical Vapour Deposition-, CVD -Chemical Vapour Deposition-), as well as alternative techniques such as printing technologies (inkjet, screen printing, etc.). The latter can manufacture devices with very large surface areas, providing a clear advantage in comparison with conventional manufacturing processes. Inkjet technology stands out among these printing techniques for being a non-contact technique that can apply ink over any type of substrate, both rigid and flexible.

Functional inks are needed in order to obtain this type of printing device. Functional inks are the type of inks that are not just decorative but instead give new properties to the substrate where they are applied on.

There is a wide variety of functional inks available in the market for this technology. They are mostly conductive inks based on metal nanoparticles, mainly silver, although there are other alternatives such as copper, as shown in document ES2538042 B1, of the same proprietor as the one of the present invention.

There are also other functional inks used for manufacturing touchscreens characterised in that they are conductive and transparent. ITO inks are one of them, as described in patent document ES2455490 of the same proprietor as the one of the present invention and in patent document WO2010/003743, and there are also alternatives based on conductive polymers such as the ink based on PEDOT:PSS.

Other types of functional inks currently in the market include resistive inks based on nanoparticles (such as carbon nanotubes) and dielectric inks based on polymers. By contrast, there is limited availability of insulating inks. When manufacturing using printing techniques, these inks are essential for complex devices with designs that have crossing conductive tracks that must be insulated from one another for the assembly to work.

There are several patent documents such as applications US2003175411, US2008085369 and US200310864. The object of these patents comprises nanoparticles based in oxides, such as silicon oxide, titanium oxide, etc., in order to obtain this type of inkjet printing inks for printed circuits.

The present invention refers to obtaining an insulating ink based on nanoparticles of oxides for inkjet printing, which can obtain films with the required insulating properties on both rigid and flexible substrates. This ink does not require a polymerisation process, as described in patent document US2008085369, while the polar solvents used in combination with other components ensure high quality printing as well as the required ink stability. Additionally, the method of obtaining the ink produces an optimum degree of dispersion of nanoparticles in order to apply them by means of inkjet. This results in an ink providing the required insulation between conductive tracks.

### DESCRIPTION OF THE INVENTION

The present description refers to an inkjet printing ink, the method of obtaining said ink and its use for making an insulating film, based on preparing stable inks of nanoparticles of inorganic oxides dispersed in a liquid medium in order to then apply them by means of inkjet printing techniques to obtain a film with insulating properties for printed electronics.

Therefore, the nanoparticles of inorganic oxides used are of a size smaller than or equal to 100 (nm) nanometers, preferably between 20 and 80 (nm) nanometers. This size is required to achieve lower sintering temperatures so that no problems arise when the particles are dispersed in the chosen liquid medium. If the agglomerates formed in the dispersion medium are bigger than 1.2 (µm) micrometres, the injectors run the risk of being obstructed.

The nanoparticles chosen for obtaining a stable and homogenous ink are preferably: silicon nitride, zirconium oxide, barium titanate and silicon dioxide, as well as any combinations thereof, preferably zirconium oxide and barium titanate.

In this way, the insulating ink that is the object of the invention comprises between 25% and 35% by weight of nanoparticles of at least one inorganic oxide, of a size smaller than or equal to 100 nm.

In addition, the insulating ink comprises between 65% and 75% of its weight in a liquid dispersion medium, which in turn comprises at least one polar liquid medium comprising between 84% and 99.8% by weight of the dispersion medium, at least one non-ionic polymeric dispersing agent comprising between 0.1% and 8% by weight of the dispersion medium, and at least one polymeric binding agent comprising between 0.1% and 8% by weight of the dispersion medium. Preferably the polar liquid medium can comprise at least one polar solvent selected from at least one alcohol, at least one glycol, or a combination between at least one alcohol and at least one glycol. Preferably the polar solvent can be selected from a group of methyl alcohol, ethyl alcohol, isopropyl alcohol, ethylene glycol, glycerine, diethylene glycol and other similar compounds as well as any combination thereof, preferably using a mix of between 40% and 50% ethyl alcohol, 40% and 50% ethylene glycol, and 5% and 10% diethylene glycol, all of which by weight.

Choosing the carrier is important since it will dictate for the most part the behaviour of the liquid inside the printhead. The two most influential parameters in inkjet technology are surface tension and viscosity.

Surface tension is affected mainly by the liquid medium selected. It actively intervenes in two stages of the process. Firstly, it is in charge of forming the drop in the printhead since it intervenes in the pressure of the meniscus, that is, it keeps the drop inside the printhead preventing it from dripping (negative pressure) between each jet of ink. Secondly, it takes part in forming the image when the drop reaches the substrate. Therefore, it is in charge of making the ink wet the substrate properly so that there is a compromise between the definition and the adherence achieved.

Viscosity determines if the ink can be injected or not using the technology selected. The liquid medium must be a Newtonian fluid with low viscosity (8-40 mPa.s) at 21°C. Therefore, using polar liquids ensures achieving good definitions when printing difficult geometric patterns. Using this type of mediums ensures that the surface tension and the viscosity of an ink are suitable for applying it via inkjet technology.

A non-ionic polymeric dispersing agent (preferably, polymeric alkoxylate or polyester) weighing between 0.1% and 8% is added to the aforementioned liquid medium, in order to adjust the parameters of surface tension and viscosity, and also to ensure that the dispersion of nanoparticles is homogeneous and stable in time. Using the dispersing agent also stops glues from forming, which cause problems with the extensional viscosity, which in turn would not make it possible to print using inkjet technology. A polymeric binding agent weighing between 0.1 % and 0.8% is also added to provide adherence to the ink. The binding agent can be polyvinylpyrrolidone, polyvinyl chloride or polyvinyl alcohol, among other examples.

Several steps are followed in order to obtain the ink. Firstly, the liquid dispersion medium is prepared by adding the mixture of the polar liquid medium, the dispersing agent, and the binding agent, preferably by means of mechanical agitation for a period of at least 15 minutes.

Then the liquid dispersion medium is introduced into a bead mill. This dispersion technique can obtain lower particle sizes as well as better sample homogeneity compared to other techniques such as ultrasound probes. Moreover, it is a very versatile piece of equipment.

Then the nanoparticles that make up the ink are progressively added to ensure their proper homogeneity and dispersion.

Dispersion is performed preferably at energies between 0.30 and 0.40 kWh, and with beads sized 200-300 µm. The dispersion time required is preferably comprised between 300 y 350 minutes, and it is the minimum required to ensure a proper degree of dispersion allowing the ink to be applied by the injectors. Therefore, the ink obtained is stable enough to prevent the nanoparticles of inorganic oxides from binding together and blocking said injectors. The average size of agglomerate medium after the milling process is no bigger than 90 nm.

The insulating ink obtained with this process is homogeneous and stable for a period of at least six months. The viscosity measured using a capillary microviscometer has values between 8 and 40 mPa.s at 21°C. Surface tension measured using a bubble pressure tensiometer is comprised between 28 and 34 mN/m at 21°C.

The substrate where the ink will be applied on must be chosen in order to obtain an insulating film. Rigid (such as glass or aluminium oxide) or flexible (kapton) substrates that are able to withstand high temperatures (of up to 400 °C) can be used to apply the ink. The ink is applied using inkjet technology.

In order to form an insulating film of nanoparticles of inorganic oxides, once the ink is applied on the substrate it is necessary to start a curing process to eliminate the organic part and therefore obtain an insulating layer. To do so it is necessary to synthesize the nanoparticles by subjecting the film to high temperatures (between 350 °C and 400 °C) for a period of time, preferably 30 minutes.

After being tested for adherence, the film formed meets the requisites under category 0 of regulation UNE-EN ISO 2409:2013 (the cuts have smooth edges and there are no squares separating from the lattice). Similarly, the film also produces the design printed in good definition, without any satellites, and with the width of the tracks in the correct resolution.

The film obtained using this procedure is capable of insulating conductive tracks crossing one another.

The characterization of the insulating properties of the film can be carried out by means of insulation on flat condenser plates prepared over kapton and with different gaps of separation. When a difference in electric potential between the conductive parts is applied, the voltage is increased until it produces an electric arch. Insulating films made of nanoparticles of prepared inorganic oxides can withstand between 3.5 and 4 (kV) kilovolts.

### BRIEF DESCRIPTION OF THE FIGURES

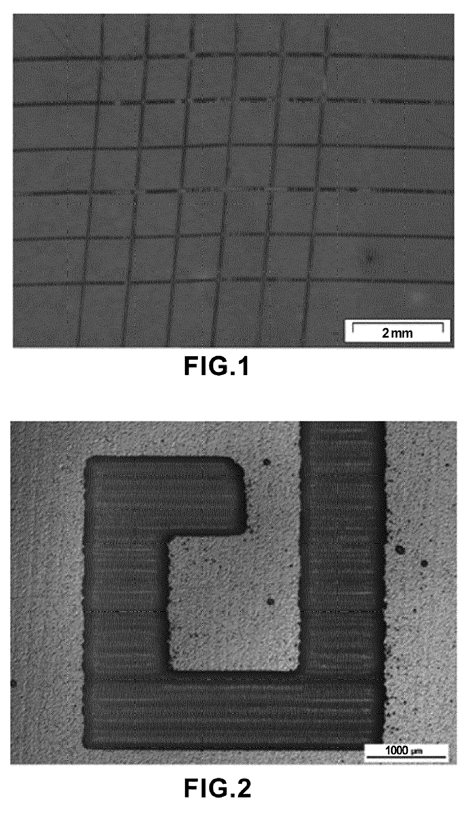

Figure 1 shows the result of an adherence test performed according to regulation UNE-EN ISO 2409:2013 on a layer printed with the insulating ink that is the object of the invention over kapton, showing good adherence after performing the lattice test since the edges of the cuts are smooth and none of the squares have separated from the lattice (category 0).
Figure 2 shows a printed track using inkjet with a resolution of 185 dpi, with a track width of 1 mm just as the original design, so the ink shows the proper definition for the design printed, without any satellites, which means that its contour is perfectly defined and the width of the tracks have the correct definition.

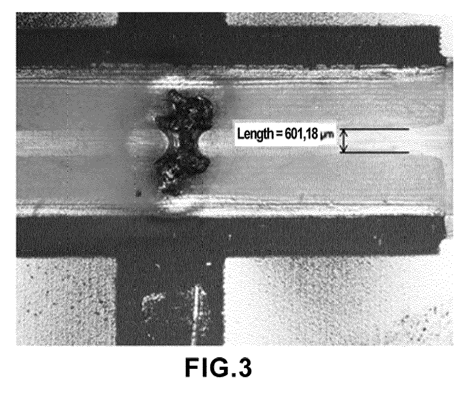

Figure 3 shows a view of the electric arch that appears after performing the insulating measures test, after performing the test over flat plate condensers printed using inkjet with conductive ink and the insulating ink tested, with different gaps between the conductive tracks, and after applying a difference in electric potential between the conductive tracks until an electric arch is produced. These insulating films withstand between 3.5 and 4 (kV) kilovolts.

### EXAMPLE 1:

162.5 grams of the polar liquid medium were prepared. The polar solvents used were alcohol and a mix of glycols in a proportion of 1:1 by weight respectively, with a glycol ratio of 4:1. This mix was prepared by magnetic agitation during 15 minutes at 200 rpm. 5% of dispersing agent and 3% of binding agent, both percentages by weight of the nanoparticles, were added to the liquid dispersion medium in order to constitute it. This dispersion medium was homogenised by means of mechanical agitation until the dispersing agent and the binding agent were diluted.

The resulting mix was inserted in a Netzch bead mill with beads the size of 200-300 micrometres. The quantity of nanoparticles of zirconium oxide and barium titanate needed was weighted (35% by weight, the ratio between them being 85% and 15% respectively). The nanoparticles were gradually added to the bead mill. The mixture was kept in the mill for no more than 300 minutes, applying energy below 0.40 kWh. At the end of the process, the mill was emptied to obtain the final ink.

The different properties of the ink were measured. The ink showed a viscosity between 10 and 15 mPa*s at 21°C, measured using a capillary microviscometre, and a surface tension between 29 and 34 mN/m at 21°C, measured using a bubble pressure tensiometer.

Ink stability and particle size were obtained using "Dynamic Light Scattering" technology. The distribution obtained was monodisperse and the average size of the agglomerates formed was below 90 nm. The insulating ink obtained with this process was homogeneous and stable for a period of at least six months.

All these properties were optimum for printing with the ink using inkjet printing techniques.

The ink was inserted in a XAAR piezoelectric printhead with drop sizes of 40 pi and a native resolution of 185 dpi. The ink was applied on different substrates using this inkjet technology. The substrates where the ink was laid over were glass and kapton.

Once the ink was printed, a curing process was carried out in order to eliminate the organic part to then obtain an insulating layer. For said purpose, the film was subjected to a temperature no lower than 350°C for at least 30 minutes.

The film constituted showed the required adherence to the substrate since, after being subjected to the adherence test according to regulation UNE-EN ISO 2409:2013, it complied with the requisites of category 0. Additionally, it showed the required definition since the printed ink had track dimensions similar to the ones of the design printed, without any satellites, its contours were perfectly defined and the width of the tracks had the correct resolution.

The film insulation was characterised by performing tests for insulation resistance and dielectric strength. The insulation resistance test consists of measuring the current circulating through the insulating material when a fixed voltage constant current is applied between both its ends. Measurements were carried out using a test voltage of 500 V applied during 60s. The values obtained were higher than 100 GΩ (full scale of the equipment).

The dielectric strength test consists of applying a voltage between both ends of the insulating material to verify if it is capable of withstanding said voltage without producing an electric arc or a disruptive discharge.

The test procedure was based on regulation UNE-EN 60243-1:1999. The test voltages applied were 0.5, 1.0, 1.5, 2.0, 2.5, 3.0, 3.5 and 4.0 kV during 60s. The tripping current of the generator was fixed at 100 mA.

The test was performed on samples consisting of prints of flat condensers on kapton with a conductive ink and the isolating ink to be characterized. These condensers were prepared at different gaps of separation.

The insulating films made of nanoparticles of prepared inorganic oxides withstood between 3.5 and 4 (kV) kilovolts.

## Claims

1. An inkjet printing ink, **characterized in that** it comprises:
(a) between 65% and 75% by weight of a liquid dispersion medium comprising between 84% and 99.8% by weight of a polar liquid medium, between 0.1% and 8% by weight of at least one non-ionic polymeric dispersing agent and between 0.1 % and 8% by weight of at least one polymeric binding agent; and
(b) between 25% and 35% by weight of nanoparticles of at least one inorganic oxide of a size smaller than or equal to 100 nm;
said inkjet printing ink further **characterized by** having a viscosity between 8 and 40 mPa.s, measured at 21°C, and a surface tension between 28 and 34 mN/m, measured at 21°C.

2. An ink according to claim 1, wherein the polar liquid medium comprises at least one polar solvent selected from at least one alcohol, at least one glycol, or a combination between at least one alcohol and at least one glycol.

3. An ink according to claim 2, wherein the polar solvent is selected from a group consisting of methyl alcohol, ethyl alcohol, isopropyl alcohol, ethylene glycol, glycerine, diethylene glycol, as well as any combination thereof.

4. An ink according to claim 2 or 3, wherein the polar liquid medium comprises:
. between 40% and 50% by weight of ethyl alcohol,
. between 40% and 50% by weight of ethylene glycol; and
. between 5% and 10% by weight of diethylene glycol.

5. An ink according to any one of the previous claims, wherein the nanoparticles of at least one inorganic oxide are selected from a group consisting of silicon nitride, zirconium oxide, barium titanate and silicon dioxide, as well as any combinations thereof.

6. A method of obtaining an inkjet printing ink as claimed in any of the claims 1 to 5, **characterized in that** it comprises:
(a) preparing the liquid dispersion medium by mixing using mechanical agitation during at least 15 minutes:
. a polar liquid medium, comprising between 84% and 99.8% by weight;
. at least one non-ionic polymeric dispersing agent comprising between 0.1 % and 8% by weight, and
. at least one polymeric binding agent comprising between 0.1% and 8% by weight;
(b) inserting the liquid dispersion medium obtained in the previous stage in a bead mill and progressively adding nanoparticles of at least one inorganic oxide of a size smaller than or equal to 100 nm; and
(c) dispersing the nanoparticles by means of a process of milling in the bead mill during a period between 300 and 350 minutes at energies between 0.30 and 0.40 kWh, using beads between 200 and 300 µm in size.

7. Using the inkjet printing ink as described in any one of claims 1 to 5 to produce an insulating ink, **characterized in that** it comprises applying the ink by means of an inkjet printing process on a substrate suitable for withstanding temperatures of up to 400 °C, and subjecting the ink applied on the substrate to a curing process at a temperature between 350°C and 400°C.

## Amended claims

### Amended claims in accordance with Rule 137(2) EPC.

1. An inkjet printing ink, **characterized in that** it comprises:
(a) between 65% and 75% by weight of a liquid dispersion medium comprising between 84% and 99.8% by weight of a polar liquid medium, between 0.1% and 8% by weight of at least one non-ionic polymeric dispersing agent and between 0.1% and 8% by weight of at least one polymeric binding agent; and
(b) between 25% and 35% by weight of nanoparticles of at least one inorganic oxide of a size smaller than or equal to 100 nm;
with a viscosity between 8 and 40 mPa.s, measured at 21°C, and a surface tension between 28 and 34 mN/m, measured at 21°C.

2. An ink according to claim 1, where the polar liquid medium comprises at least one polar solvent selected from at least one alcohol, at least one glycol, or a combination between at least one alcohol and at least one glycol.

3. An ink according to claim 2, where the polar solvent can be selected from a group of methyl alcohol, ethyl alcohol, isopropyl alcohol, ethylene glycol, glycerine, diethylene glycol, as well as any combination thereof.

4. An ink according to claims 2 or 3, where the polar liquid medium comprises:
• between 40% and 50% by weight of ethyl alcohol,
• between 40% and 50% by weight of ethylene glycol, and;
• between 5% and 10% by weight of diethylene glycol,

5. An ink according to any of the previous claims, where the nanoparticles of at least one inorganic oxide are selected from a group consisting of silicon nitride, zirconium oxide, barium titanate and silicon dioxide, as well as any combinations thereof.

6. A method of obtaining an inkjet printing ink as claimed in any of the claims 1 to 5, **characterized in that** it comprises:
(a) preparing the liquid dispersion medium by mixing the following using mechanical agitation during at least 15 minutes:
• a polar liquid medium, comprising between 84% and 99.8% by weight of the medium;
• at least one non-ionic polymeric dispersing agent comprising between 0.1 % and 8% by weight of the medium, and
• at least one polymeric binding agent comprising between 0.1% and 8% by weight of the medium;
(b) inserting the liquid dispersion medium obtained in the previous stage in a bead mill and progressively adding nanoparticles of at least one inorganic oxide of a size smaller than or equal to 100 nm; and
(c) dispersing the nanoparticles by means of a process of milling in the bead mill during a period between 300 and 350 minutes at energies between 0.30 and 0.40 kWh, using beads between 200 and 300 µm in size.

7. Use of the inkjet printing ink as described in any one of the claims 1 to 5 to create an insulating film, wherein the inkjet printing ink is applied on a substrate and is cured at a temperature between 350°C and 400°C once the insulating ink is applied on the substrate.

8. Use of the inkjet printing ink according to claim 7, wherein the substrate is rigid or flexible.

9. Use of the inkjet printing ink according to claim 8, wherein the substrate is selected from the group consisting of glass, aluminium oxide and kapton.

10. Use of the inkjet printing ink according to claim 8, wherein inkjet printing ink is applied on the substrate by inkjet technology.
